# EUROPEAN PATENT APPLICATION

(11) **EP 4 235 344 A1**
(43) Date of publication of application: **30.08.2023**
(21) Application number: 22020129.7
(22) Date of filing: 25.03.2022
(51) Int. Cl.: G05D 1/10, G08G 5/00, B64C 39/02

(54) **A SYSTEM FOR REPOSITIONING UAV SWARM**

(30) Priority: 24.02.2022 US 202217652361
(71) Applicant: Microavia International Limited, D04 Dublin 4 (IE)
(72) Inventor: Biriuk, Ivan, 194017 Saint Petersburg (RU); Trubin, Artem, 193313 Saint Petersburg (RU); Permiakov, Aleksandr, 197082 Saint Petersburg (RU)
(74) Representative: Ivanov, Ivan Nikolov

(57) **Abstract**

The present disclosure relates to a system for repositioning an UAV swarm during a flight mission. The system comprises a 3D animation generator and a mission generator. A 3D animation generator is a tool that generates animation of flight mission planning that includes building a formation that depicts a figure formation, selecting a set of key nodes, where each key node corresponds to UAV, as such when all key nodes are combined, they represent the figure formation. Distance control algorithm is applied to the flight mission planning animation. Optimized 3D animation is shared with the mission generator that builds the actual flight mission planning files. Trajectory planning, optimization, mapping, mission planning, and visualization is executed based on the animation report to generate a flight mission file. The flight mission file is recorded into UAVs to execute the flight mission.

## Description

### TECHNICAL FIELD

1. The present disclosure generally relates to an Unmanned Aerial Vehicle (UAV). In particular, the present disclosure relates to a system for repositioning UAV swarm for a figure formation.

### BACKGROUND

2. An unpiloted vehicle or unmanned aerial vehicle (UAV) may be referred to as a drone, which may operate autonomously or be remotely controlled by a nearby user may be referred to as drones. The term UAV or drone may also encompass other types of autonomous flying devices.

3. The copter class of UAVs or drones may include any number of spinning blades that create lift by forcing air downward or in other directions. Other types of UAVs may be powered by other propulsion means and use other flight configurations, such as drones using turbines in lieu of spinning blades, jet packs, and fixed wing configurations. Initial uses of UAVs included surveillance and aerial photography. Recent efforts have expanded into many other fields including surveying, package delivery, robot waiters, and other applications. Many UAVs are remotely controlled by human operators. Some UAVs are autonomous and configured with control-boards with trajectories and computer instructions stored in for piloting the UAVs along the trajectories.

4. Some conventional techniques employ multiple drones that have described various means of coordinating the drone formations. In some applications, it is desirable or useful to perform a task through the use of two or more UAVs that need to be controlled in a centralized or organized manner to perform the task. For example, numerous drone aircraft or UAVs such as multicopters may be used to provide surveillance of a geographical area. In such an application, swarm control or swarming may be used to control the UAVs as they fly over the targeted geographical area. A swarm may be thought of as a self-organizing particle system with numerous autonomous, reflexive agents (e.g., UAVs are the particles in this example) whose collective movements may be determined by local influences such as wind and obstacles such as another nearby UAV. In one example, the UAV swarm may be assigned with an entertainment show mission. Collectively, the UAV swarm may form a figure in the sky by hovering each UAV at a specific location. In such figure formations, the UACs can emit lights, lasers, colours or any such means for exhibiting a show. In one more example, a flight formation show can be performed by the UAVs. The UAVs can collectively form a figure formation, then get repositioned to form another figure.

5. While swarming, the UAVs move in the space over the monitored area in a defined manner, for example to form a figure. The UAVs are independent and are often locally controlled, which may include communicating with a nearby UAV to determine which one moves or whether both should move to avoid an impending collision. Collisions are an issue as the UAVs move independently and randomly and often will have crossing paths in the shared airspace. Swarming allows the UAVs to fly over a large area, which is useful in monitoring or entertainment applications, such as light shows.

6. In UAV swarms or swarm formations, each drone is driven independently. Each drone may receive its own flight plan and assigned task. Therefore, though the UAVs are flying as a swarm, each UAV may be an individual UAV configured to follow a specific trajectory and avoid collisions. Flying off and landing back may require a specific trajectory, however, formations and reformation of figures using UAV swarm may require each UAV to reposition itself from one coordinate to another and perform the assigned task. In some prior arts, trajectory planning for multiple UAVs have been disclosed. Instead of planning the trajectory in real time, it can be planned in advance according to the UAV flight sequence scheme. However, trajectory planning for each individual UAV, communicating it with UAVs, and trajectory replanning if required is not cost effective, especially when the number of UAVs is more than hundred and when the position is controlled for each frame, for example, at the rate of 30 frames per second. The 4D flight path including the space coordinate and the time coordinate of each drone is generated in advance according to the drone sequence flight scheme. The method comprises the steps of firstly obtaining an initial 4D track of each unmanned aerial vehicle in a 4D coordinate system. The 4D coordinate system comprises space coordinates and time coordinates according to a sequence flight pattern. The initial 4D track of each unmanned aerial vehicle is then corrected in an animation simulation mode. In one implementation, the 4D track is corrected in an animation simulation manner. The method step particularly includes assigning model numbers to each drone model, which are added based on the number of UAVs in the animation window, in sequence. Later, a frame rate is set according to pre-set time.

7. Planning and replanning the trajectory in real time and communicating it with the drones may be an expensive operation. Also, time required for replanning the trajectories renders the system less efficient. Moreover, managing a large number of drones, may be more than hundreds, in space simultaneously is difficult, requires large infrastructure and may be prone to infrastructure failure problems.

### SUMMARY

8. The present disclosure, in particular, relates to a system and method for repositioning each of the UAV swarm, in accordance with various embodiments. A repositioning system includes a central computing system communicatively coupled to each UAV individually. The central computing system may include a 3D animation generator and a drone mission generator, in accordance with some embodiments. The 3D animation generator may be a tool configured to generate one or more 3D animation models including, for example, 3D animation of a figure formation, dynamic model, physical model, and the like. In different implementations, the different animation models can be generated as required by the pre-flight operational planning. According to some embodiments, the 3D animation generator may select a set of key nodes as such each key node may represent a point on the figure, and when all key nodes are placed at their respective locations, they form the figure. Each key node may correspond to one UAV. In one implementation, a distance control algorithm, with the maximum matching of the bipartite graph to the matching of the distance and flight control parameters, may be applied by a 3D animation generator. The 3D animation generator may use concurrent assigning and planning trajectories (CAPT) methods for changing the animations or generate multiple animations for single flight missions . In some embodiments, a 3D animation generator may divide the set of key nodes into subsets of key nodes. Each subset may receive its own flight mission planning and perform the assigned task independently as that of other subsets. A ground control station may communicate with each subset independently.

9. The 3D animation generator is communicatively coupled to the drone mission generator for sharing the animation reports. Based on the 3D animation reports, the done mission generator may plan the mission details. The drone mission generator, in some embodiments, may include a trajectory validation unit, a trajectory optimization unit, a mapping unit, a mission planning assembler, and a visualizing unit.

10. According to some embodiments, the trajectory validation unit may be provided to assess status of trajectory in view of certain rules, such as dynamic rules and collision prediction rules, to determine if a trajectory route that will be followed by UAV during the mission is a befitting route.

11. According to some embodiments, the trajectory optimization unit may be provided to optimize the trajectory route. The trajectory optimization unit may optimize the trajectory route for flight parameters, for example, distance minimization, such as a fastest route, and minimum resource consumption, such as fuel consumption.

12. According to some embodiments, the mapping unit may be provided to plan a map for trajectories corresponding to each UAV. The mapping unit may comprise Global positioning Service sensors, geographical sensors, and the like to assess the current position of each UAV on the map and monitor the trajectory movements of each UAV in accordance with the map.

13.According to some embodiments, the mission planning assembler 122 may be coupled to one or more sensors to plan the pre-flight operational aspects of the mission. Mission planning assembler 122 may determine time and duration of the flight, assigned tasks to each UAV and such.

14.According to some embodiments, the visualizing unit may be configured to prepare visual representation of the mission planning.

15.All aspects and details corresponding to the flight mission planning may then be sent to each UAV by a drone connector, in accordance with some embodiments.

16. In some embodiments, a method of repositioning each Unmanned Aerial Vehicle (UAV) of a UAV swarm from respective first coordinate to a second coordinate is disclosed. The method step includes building a 3D digital visual representation model of a static figure to be formed by the UAV swarm. The UAV swarm must change its respective position to change formation from one figure to another. The visual representation of the formation of the next figure is built . In an implementation, the origin or reference point (x,y,z,t)=(0;0;0;0) corresponds to the position of each UAV. In this example, the reference point corresponds to the position of the first UAV starting the flight from zero position. Subsequently, the reference point will be a parameter that can be changed in order to shift all the trajectories of the UAVs parallel in space. This parameter will be transmitted as metadata for the flight mission planning.

17. According to the embodiment, the method further includes selecting a set of key nodes on the figure formation. The set of the key nodes include one or more key nodes which form the static figure if each key node is placed at a certain place. Each key node, according to one implementation, may represent one UAV.

18. According to the embodiment, the method further includes determining the position of a set of anchor points, based on the key nodes. The anchor point may represent the exact final location of each UAV according to the figure formation. The UAV may fly from first coordinate to second coordinate to form the figure. The UAV may be anchored at some point on the location of the second coordinate. The anchor point may correspond to the second coordinate of the respective UAV.

19. According to the embodiment, the method further includes predicting a trajectory route for moving each of the set of UAVs from respective first coordinate to respective second coordinate. The trajectory route may indicate the trajectory that each UAV may travel for repositioning. First coordinate may correspond to the original position of the UAV, and second coordinate may correspond to an expected location where the anchor point may have been determined. A path that UAV must travel to reach at the second coordinate from the first coordinate may be predicted as a trajectory route.

20. According to the embodiment, the method further includes recoding the trajectory route into control signals of UAV control boards. All UAVs may be synchronized in real time using corresponding GPS locations. The control boards may drive UAVs to respective anchor points along the trajectory route.

21. As described with reference to different embodiments, the present disclosure relates to dividing the total number of drones into smaller multiple sets of drones according to the flight mission planning. This feature is particularly advantageous as instead of managing a large number of drones, it is more effective to manage sets of drones. Each set is communicated with the trajectory planning in sequence. The trajectory planning is optimized using optimization algorithms , i.e., a distance control algorithm. Flight mission planning for each drone from each set of drones is optimized, with respect to other drones from the swarm, as such to travel shortest distance with minimum consumption of resources and time. Thus, communicating with a set of drones instead of individual drones saves time and performance and infrastructure cost. Further, distance control optimization renders the system more effective in view of performance cost and overall operational efficiency.

### BRIEF DESCRIPTION OF THE DRAWINGS

22. The foregoing and other objects, aspects, features, and advantages of the disclosure will become more apparent and better understood by referring to the following description taken in conjunction with the accompanying drawings, in which:
23. FIG. 1 depicts a generic block diagram of the repositioning system, according to some embodiments;
24. FIG. 2 depicts a figure formation, according to some embodiments;
25. FIG. 3 illustrates a set of key nodes placed on the figure formation, according to some embodiments;
26. FIG. 4 illustrates an original position of the UAV swarm, in accordance with one embodiment.
27. FIG. 5 illustrates a flow diagram of a method steps implemented to operate the repositioning system, according to some embodiments.

### DETAILED DESCRIPTION

28. The embodiments will now be described more fully hereinafter with reference to the accompanying figures, in which preferred embodiments are shown. The foregoing may, however, be embodied in many different forms and should not be construed as limited to the illustrated embodiments set forth herein. Rather, these illustrated embodiments are provided so that this disclosure will convey the scope to those skilled in the art.

29. The invention can be implemented in numerous ways, including as a process; an apparatus; a system; a composition of matter; a computer program product embodied on a computer readable storage medium; and/or a processor, such as a processor configured to execute instructions stored on and/or provided by a memory coupled to the processor. In this specification, these implementations, or any other form that the invention may take, may be referred to as techniques. In general, the order of the steps of disclosed processes may be altered within the scope of the invention. Unless stated otherwise, a component, such as a processor or a memory described as being configured to perform a task may be implemented as a general component that is temporarily configured to perform the task at a given time or a specific component that is manufactured to perform the task. As used herein, the term 'processor' refers to one or more devices, circuits, and/ or processing cores configured to process data, such as computer program instructions.

30. A detailed description of one or more embodiments of the invention is provided below along with accompanying figures that illustrate the principles of the invention. The invention is described in connection with such embodiments, but the invention is not limited to any embodiment. The scope of the invention is limited only by the claims and the invention encompasses numerous alternatives, modifications and equivalents. Numerous specific details are set forth in the following description in order to provide a thorough understanding of the invention. These details are provided for the purpose of example and the invention may be practiced according to the claims without some or all of these specific details. For the purpose of clarity, technical material that is known in the technical fields related to the invention has not been described in detail so that the invention is not unnecessarily obscured.

31. Typically, few control techniques have been employed to control multiple UAVs or UAV swarms to perform assigned tasks. The UAV swarms may get tasks assigned that may include putting up light/ laser shows, surveying geographical area, delivering large payloads, and the like. The entertainment or advertisement applications may require the UAV swarm/ swarm to align into a specific figure. UAV shows may further require changing figure formations multiple times. In such applications, the UAVs are configured and controlled to change their respective positions to form new formations For changing positions, or forming the figure from the original anchor point, each UAV is provided with a trajectory route. Each UAV must follow the trajectory route to change to position. For such reformations, and moving the UAVs along the trajectories, few safety and flight parameters are taken into consideration. For example, collisions are an accepted risk of the control method, with the area under the flying UAVs being kept free of human observers. In other applications, each UAV is controlled from a central controller that is typically placed on the ground. A predetermined flight path is designed or selected for each UAV such that none of the flight paths cross, and a tolerance or spatial envelope is provided to account for flight variances due to conditions, such as wind, storm, or tornado that may cause a UAV to stray off its predefined course.

32. The present disclosure describes various details of an unmanned aerial vehicle (UAV), particularly, a UAV swarm assigned with a group task. The UAVs may be assigned with tasks, such as the system pick-up, carry, drop off payloads and/or entertainment shows, for example a light show. In an embodiment, the UAVs are capable of swapping a battery or fuel cell, recharging or refuelling on the way to a final destination. From construction aspects, the number of rotors of UAVs may vary, for example two rotors, four rotors, six rotors, eight rotors and the like. One widely used variant is a quadcopter or quad rotor. Generally, a quadcopter is an aerial rotorcraft that is propelled by four rotors. In certain embodiments, control of UAV motion is achieved by altering the pitch or rotation rate of one or more rotors. Other configurations are also possible for suitable UAVs, including multi-rotor designs, such as dual rotor, tri rotor, hexarotor, and octorotor, or single-rotor designs, such as helicopters. Any variant of the UAV may be suitably adapted for various applications. In one example, the UAVs can be employed for entertainment purposes, such as to put up a light show forming various figures in the sky.

33. UAVs suitable for use in entertainment systems may be required to form different figures in the sky. For that, in a single mission, multiple formations may have to be formed by UAVs. Each UAV of the UAV swarm must travel through a certain trajectory to change its position from first coordinates to second coordinates. Repositioning of each UAV may result in repositioning from one formation to another formation. In such implementation, UAVs may be autonomous or remotely piloted. For example, a UAV can be remotely piloted on a trajectory route in order to provide flight mission plans for subsequent autonomous flights. Similarly, at instances where bad weather, environmental, or other issues develop during an autonomous flight, a remote pilot can operate the UAV. The UAV can also be switched from remote pilot operation to autonomous flight. For example, a remote pilot may operate on a portion of the route and then switch the UAV to autonomous operation. For autonomous or remotely piloted operation, the UAV must receive control signals (i.e., instructions executed to pilot the UAV) either from a control board or a remote pilot. The control signals may be derived from flight mission data, current status and mission planning.

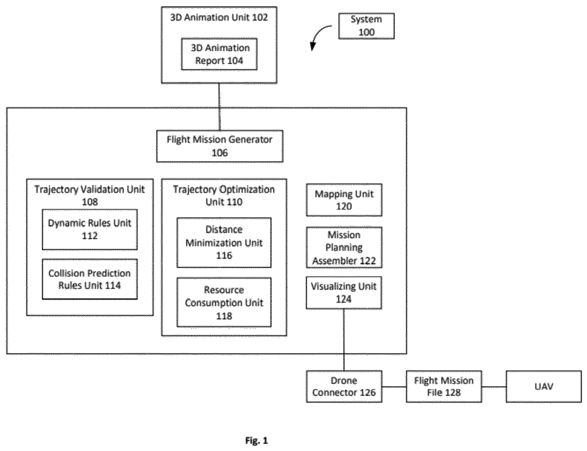

34. With reference to Fig. 1, the system 100 mainly includes a 3D animation unit 102, a flight mission generator 106, and drone connector 126.

35. In accordance with one embodiment, the 3D animation unit 102 is configured to generate animated reports in 3 dimensions. The Animated reports may depict figure formation (i.e., any figurative figure, such as butterfly, stars, flowers, etc.). Each formation may be strategically planned by using a set of key nodes. Key nodes may be placed to denote a location on the figure formation. All the selected key nodes, when combined, may form a figure or intended figure. One or more key nodes may form one segment of the intended figure formation. For example, if the butterfly formation is being planned, 15 key nodes may form the left wing and additional 15 key nodes may form the right wing of the butterfly. Each of these fifteen key nodes may have a specific location to represent on each wing. 3D animation report 104, in one embodiment, may present colours to be emitted by each UAV at its location.

36. In one embodiment, the 3D animation unit 102 may apply a distance control algorithm for animation calculation. In one implementation the distance control algorithm may be a Hopcroft-Karp By applying a Hopcroft-Karp algorithm with the maximum matching of the bipartite graph to the matching of the distance and dynamic rules, finding out a matched trajectory for each key node and generating 3D animation report 104 accordingly. According to an embodiment, the distance control algorithm may be applied to build an animation, then frames corresponding to the animation may be processed with optimal frequency (for example, considering each 5^{th} frame for processing), and thereafter, dynamic and distance rules may be compared based on the processed trajectory for each key node. Such optimization may result in speeding up the processing and rendering of animation into a flight mission.

37. In one embodiment, 3D animation unit 102 may be configured to create subsets of the set of the key nodes. For example, if the set of key nodes contains 100 key nodes, i.e., 100 UAVs, the 3D animation unit 102 may split the set into two subsets, i.e., subset of key nodes A and subset of key nodes B. Each subset may include 50 key nodes. In the animation report, one or more flight control parameters of each subset may be considered. For example, speed, acceleration, altitude and such. Take off time, landing time, hovering duration, and such flight related aspects may be determined for each subset. Such flight planning details may then be communicated with each subset separately by a Ground Control Station (GCS), a device controlling the UAV swarm.

38. According to an embodiment, the 3D animation unit 102 may be communicatively coupled to the flight mission generator 106 and transmit the 3D animation report 104. The flight mission generator 106, in one example, may be, a plugin for 3D animation unit 102, that may be configured to plan an entire flight mission considering various flight parameters and the risk factors. Based on the 3D animation report 104, the flight mission generator 106 may generate the flight mission that can be executed by UAVs. The flight mission generator 106 may include a trajectory validation unit 108, a trajectory optimization unit 110, a mapping unit 120, a mission planning assembler 122, and a visualizing unit 124.

39. In some embodiments, a trajectory validation unit 108 may be implemented to plan the trajectory route. The trajectory route may include making the route calculation, may also identify and take into consideration existing routes, or flight paths of other UAVs that are also associated with the UAV swarm. The trajectory validation unit 108, in one embodiment, may include a dynamic rules unit 112 and a collision prediction rules unit 114.

40. According to some embodiments, each UAV from the UAV swarm may be parked at original coordinates, i.e., first coordinates, and may have to fly to destination coordinate, i.e., second coordinate. The second coordinate may be a destination location, corresponding to the UAV, identified on the figure formation. The flight between first to second coordinates is planned through a trajectory route connecting both coordinates.

41. For trajectory planning, the trajectory validation unit 108 may include the dynamic rules unit 112 that may be configured to apply dynamic rules for determining trajectory route. Taking other UA 's' flight trajectory into consideration may avoid potential collisions of the UAVs while enroute. The collision prediction rules unit 114 may be configured to collect data related to collision prediction and apply one or more collision prediction rules to the data to determine the possibility of collision. The one or more collision predictions rules may include, but may not be limited to, altitude and trajectory of other UAVs, weather condition and prediction during the time of travel, possible failure relating to flight dynamics, and the like. In one embodiment, the trajectory validation unit 108 may have access to a database that contains UAV data, including UAV location, UAV altitude, and UAV flight paths for other UAVs. The database may include a lookup table that associates UAV locations with UAV altitudes and computed flight paths. The database may also be a structured file with stored status table corresponding to one or more UAV status. The trajectory validation unit 108 may query the lookup table with other UAV data and receive this data for the respective locations, altitudes and flight paths of other UAVs. Once the trajectory validation unit 108, according to some embodiments, may calculate a trajectory route for one UAV from the UAV swarm based on the other UAVs from the UAV swarm. In this regard, the trajectory validation unit 108 may avoid calculating a trajectory route that may lead to a collision of UAVs while enroute.

42. According to an embodiment, the trajectory optimization unit 110 may be configured to optimize the trajectory planning. The trajectory validation unit 108 may be communicatively coupled to the trajectory optimization unit 110 to share the trajectory route planning details. Once the trajectory route and corresponding planning details are received, the trajectory optimization unit 110 may optimize the flight planning, for example, for distance minimization and resource consumption, using a distance minimization unit 116and resource consumption unit 118, respectively. For optimization, typically, optimization algorithms may be applied. As described earlier, the distance control algorithms may also be applied. In one implementation the distance control algorithm may be a Hopcroft-Karp. By applying a Hopcroft-Karp algorithm with the maximum matching of the bipartite graph to the matching of the distance and dynamic rules, finding out a matched trajectory for each key node and generating 3D animation report 104 accordingly. The trajectory optimization unit 110 may also use concurrent assigning and planning trajectories (CAPT) method for changing the animations or generate multiple animations for a single flight mission.

43. Specifically, a transition algorithm may be applied between two sets of animation along with CAPT and Hopcraft-karp. For example, the first animation set consists of 0 to 300 frames, and the second animation set consists of 301 to 800 frames. The transition algorithm may work between frames 301 to 500. The transition algorithm may actually consist of applying the CAPT algorithm on each transition frame.

44. On a frame in which the current state of the drones and the current state of the second animation set are analyzed, the Hopcraft-Karp algorithm may be applied to obtain target assignments (i.e., where each drone should fly in the second animation set on the current frame). The Hopcraft-karp algorithm assigns targets by minimizing the sum of the squares of target distances for all drones in the current frame. Thus, the Hopcraft-Karp algorithm may function as a part of the CAPT algorithm. The assignment of targets actually gives the direction of movement for the drones. In one scenario, the speed may be sufficient to reach the target, in another scenario, maximum speed may be required if the target is unattainable within a scheduled time frame. This is how the drone transitions for one frame, and then the algorithm repeats for the next frame.

45. In another implementation, the optimization may include acquiring current parameters (i.e., parameters that may affect flight planning at any extent) as inputs, compare the current parameters with stored data of ideal parameters, search for alternative parameters (for example, alternative routes in response to presented trajectory routes), and then determine most effective implementation of the flight planning. The optimization may result in shorter routes, shorten flight duration, lower fuel consumption and such.

46. The optimization algorithm may determine which route through a location, for a given altitude, provides the most advantageous wind factor value and use that information for calculating the route. In one example of optimizing a route, the most efficient route may be derived by maximizing wind factor values that indicate incentives and minimize wind factor values that indicate penalties. This is different from the usual shortest or fastest route used in ground level routing. In another example, the optimization result may return the same route, but with minimum resource consumption. The optimization algorithm may determine the most effective execution of the flight mission plan as such the same route can be travelled with use of minimum resources as compared to original flight mission plan. In another example, the route may be optimized for a selected criterion, such as minimal time to traverse the route, minimal energy consumption, or the least likelihood of crashing, as described above. Also as described above, the algorithm may consider the computed routes of other drones and their location at different altitudes at different times to avoid the scenario of flight paths of drones cutting across each other in order to avoid a chance for collision.

47. Further, the trajectory optimization unit 110 may consider additional factors impacting resource consumption, such as fuel capacity, an urgency factor associated with the UAV or flight plans associated with individual ones of the nearby UAVs, relative location of one or more nearby UAVs, external factors (e.g., weather, air traffic congestion, etc.), and/or availability of one or more inactive UAVs within a predetermined distance threshold. The trajectory optimization unit 110 may evaluate one or more flight plans that are alternatives to the current flight plan and iterate the evaluation to determine an optimized flight plan with respect to total flight time, total fuel consumption, impact to the flight plans of one or more other UAVs. The UAVs may then update its current flight plan to execute the optimized flight plan. For optimization, in one implementation, the sampling period of the set of coordinating points along the motion trajectory may be considered within a range of about 5 to 6 Hz frequency. Further, the sampling period of the light signal may be considered as about 30Hz frequency. In this implementation, frames from 3D animation report 104s are transformed into a set of UAV positions at the rate of 30 frames/ second. Sampling data of sequence of frames may generate a number of tables as that of the number of UAVs involved in the mission.

48. In some embodiments, the UAV may maintain its current flight plan if it fails to identify a more effective flight plan.

49. For performing trajectory planning and optimization, the trajectory validation unit 108 and the trajectory optimization unit 110 may have been communicatively coupled to sensors and associated control systems (not shown in the Figure), in accordance with one embodiment. Additionally, the sensors may be required to perform the tasks assigned to UAV (i.e., changing positions from one coordinate to another, hovering for predetermined time at one location and such), to maintain and optimize the assigned trajectory, and to monitor the surrounding, in the embodiment.

50. According to some embodiments, sensors may gather inputs relating to the surrounding environment. The control systems also may provide the embedded control instructions for aerial flight of the UAV which the control board of the UAV may execute. For example, the control system can alter aspects of a rotor or ducted assembly to change the flight dynamics (yaw, pitch, and roll) of the UAV, the lift generated, angle of attack, velocity, or other suitable flight characteristics. In one implementation, the sensors can be wired or wireless, depending on the needs of the UAV or the application/ assigned task to the UAV. The sensors can be relative, including, for example, inertial, IMUs, accelerometers, gyroscopes, or pressure based, or absolute, including, for example, GPS or GLONASS, magnetometers, pulsed-RF ultrawideband (UWB), or cameras.

51. As described earlier, each UAV of the UAV swarm may travel from first coordinate to another coordinate for reforming a specific figure in the sky. According to one embodiment, UAVs can fly between any two geo-locations. In one embodiment, a geolocation is equipped with one or more components, such as a ground station (which can be an original position of the UAV swarm). The UAV can use Global Navigation Satellites systems (GNSS) such as Global Positioning system (GPS) and/or Global Navigation Satellite system (GLONASS) for sub-meter localization. The UAVs may be synchronized in real time using GPS or GLONASS for locating positions. The UAV may also implement navigation related sensors, such as, for example, inertial measurement units (IMU), accelerometers, gyroscopes, inertial navigation systems, gravity sensors, external speed sensors, pressure sensors, altitude sensors, magnetometer or other sensors with or without navigation satellites during take-off, in flight, and to assist in landing. In an embodiment, an IMU may allow the UAV to navigate when GPS signals are unavailable. The IMU can be a wireless IMU. These features can allow the UAV to move between locations autonomously, for example, by relying on known waypoints. The UAV may rely on the combination of relative sensors with GNSS and magnetometers, for example, during post -take-off and pre-landing flight to achieve accuracy within meters. In some embodiments, the UAV can have a camera to assist in take-off and landing. The camera can also serve other functions such as keeping a surveillance log of activities around the UAV. Navigational assistance can be provided by a camera on the UAV, an external camera, such as a camera located at a ground station, or both.

52. The inputs acquired from above navigation and flight related sensors may significantly contribute to the trajectory planning and trajectory optimization. Further, for optimization or collision prediction, weather and atmosphere related sensors may also be implemented in some embodiments.

53. For example, the sensors may include atmospheric environment measurement sensors. To avoid adverse weather conditions, for example, a set of sensors may be implemented. Adverse weather conditions may include wind, rain, sleet, snow, hail, temperature extremes, or other aspects of the weather. Monitoring and predicting weather may alert the system 100 about more optimal flight conditions. For example, while a UAV may be capable of flying in a given headwind, it may be more efficient to wait to conduct the flight until the headwind condition has reduced or has subsided.

54. In a few examples, a wind direction sensor that measures the wind direction along the trajectory route within target space may be implemented. In another example, a wind speed sensor that measures the wind speed at the target point in the air may be implemented. Further examples may include an Air temperature sensor that measures the temperature, humidity sensors to measure humidity within the target space, a weather sensor that measures at least one of the atmospheric attributes, pressure sensors that measure atmospheric pressure within the target space.

55. In some embodiments, a mapping unit 120 is implemented for creating 2 Dimensional or 3-Dimensional maps of a predetermined area. The map can be inclusive of all trajectory routes defined by the trajectory validation unit 108. The set of coordinating points corresponding to each trajectory route may be placed on the map. The mapping unit, thereby, may generate the map that displays, in an exemplary way, first and second coordinates, trajectory routes, and the set of coordinating points for each trajectory route.

56. In some embodiment, a mission planning assembler 122 is implemented to receive the map from the mapping unit 120 and plan the mission flight. As the map indicates trajectory planning for each UAV, the mission planning assembler 122 may plan execution of each planning step in accordance with the map. For example, the mission planning assembler 122 may determine a specific interval between each UAV take off. According to the figure formation, distance for each UAV to travel, flight dynamics and flight attributes, such as maximum speed and acceleration of each UAV, the mission planning assembler 122 may determine time to start flying or repositioning, speed, hover time at one location, and travelling direction of each UAV. Other flight attributes may also be controlled of required, according to the embodiment.

57. In one embodiment, the mission planning assembler 122 may place the anchor points at the second coordinate with respect to each UAV. The mission planning assembler 122 may plan the trajectory route, based on inputs received from the trajectory validation unit 108, the trajectory optimization unit 110, and the mapping unit. The Trajectory route may be visualized and transmitted to the UAV through a drone connector.

58. In some embodiments, the mission planning assembler 122 may plan for automatically taking off, flying, hovering, measuring, and landing of the UAVs. The automatic navigation may be controlled by the central control board. The central control board may include a central processing unit (CPU or MPU), a memory coupled to the processing unit, and a display unit.

59. In some embodiments, a visualizing unit 124 may be implemented.

60. Once the trajectory validation unit 108 determine the most efficient route for each UAV, a drone connector, implemented to communicate with each UAV of the swarm, may send the flight plan to the UAV having a trajectory route associated with the second coordinates. The drone connector 126 may transmit the flight mission file 128 to each UAV in response to a routing request for a route from the first coordinates to the second coordinates.

61. The UAV, in response to receiving the flight mission file 128 from the drone connector 126, may adapt its flight path accordingly. The flight mission file 128 may have been derived from the flight parameters, which may include, speed, altitude, and angle based on the wind condition data, as described earlier.

62. The drone connector 126 may be configured to communicate with each UAV of the UAV swarm individually and separately. The UAVs can be configured to communicate wirelessly with the drone connector, in certain embodiments. The communication can establish data link channels for data transmission. The wireless communication can be any suitable communication medium, including, for example, cellular, packet radio, GSM, GPRS, CDMA, WiFi, satellite, radio, RF, radio modems, ZigBee, XBee, XRF, XTend, Bluetooth, WPAN, line of sight, satellite relay, or any other wireless data link. In an embodiment, a UAV serves as a wireless repeater.

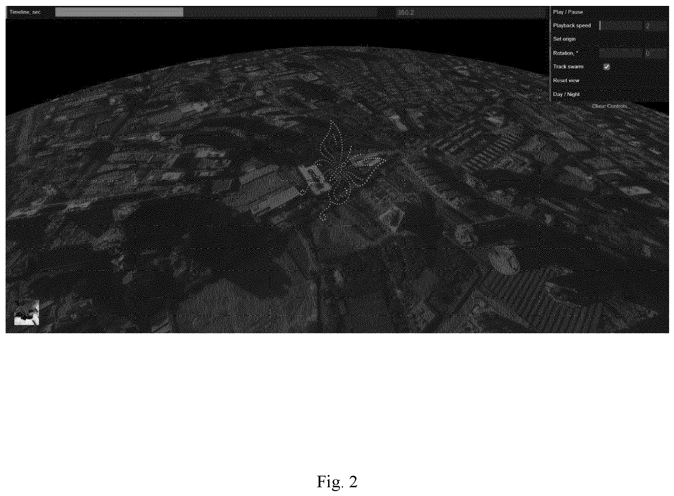

63. Fig. 2 illustrates a figure formation, in accordance with one embodiment. As shown in the figure, the figure formation depicts a butterfly. The edges of the figures may be represented in a single colour, in one implementation. The edges of the figure may be represented in multi-colour, in another implementation. The edges of the figure may be represented in constantly changing colours, in yet another implementation. Each UAV, participating in the formation, may receive a control signal for light emission in a flight plan. For example, if the formation is planned in yellow colour, each UAV may flash yellow colour. For multi-colour presentation, each UAV, participating in the formation, may have received the colour emission instructions. Accordingly, the UAV may emit the assigned colour or constantly changing colours.

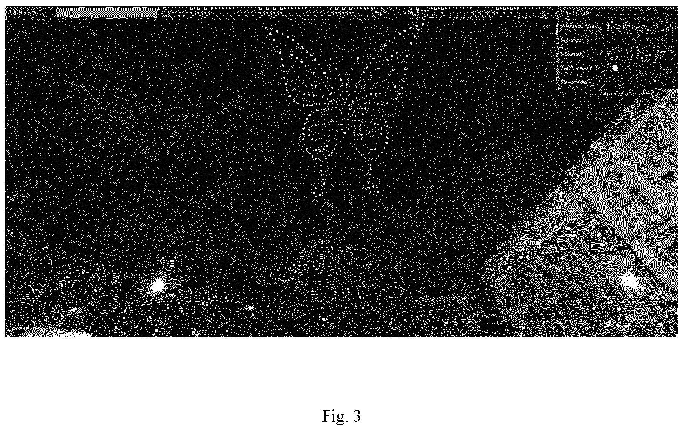

64. Fig. 3 illustrates a set of key nodes placed to represent a figure formation, in accordance with one embodiment. The figure formation depicts a butterfly. The set of key nodes, as described earlier, may represent a location for UAV to hover/ stabilize and emit colours as instructed. Each coordinating point may denote one UAV. For example, the set of 100 coordinating points may require 100 UAVs to be placed in the formation. Each UAV may have received a flight plan, including trajectory route and task assignments (i.e., which colour to emit, colour emission duration, hovering at one location duration and such). The task assignment for each UAV, with reference to Fig.3, may include exact hovering location to form a butterfly, colour emission to render single coloured or multi-coloured butterfly, and such.

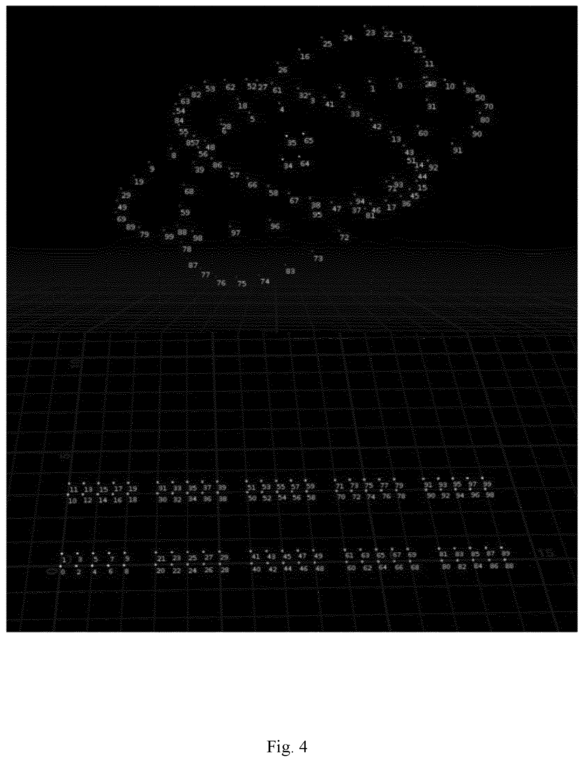

65. Fig. 4 illustrates an original position of the UAV swarm, in accordance with one embodiment. The original position of each UAV may be referred to as the first coordinates. As shown in the Fig, 4, in original position, the UAV swarm may have been arranged forming a horizontal parking formation, in one implementation. The original parking formation, in any other implementation, can be formed in different pattern. Each UAV, parked at the original position, may receive the flight plan including the trajectory plan. The trajectory plan may include the trajectory route, time of take-off, duration of hovering, time of landing or returning to the original coordinates and such. Following the trajectory plan, each UAV may reposition from the first coordinates (i.e., parking location) to the second coordinates (i.e., destination location), forming a figure pattern thereby.

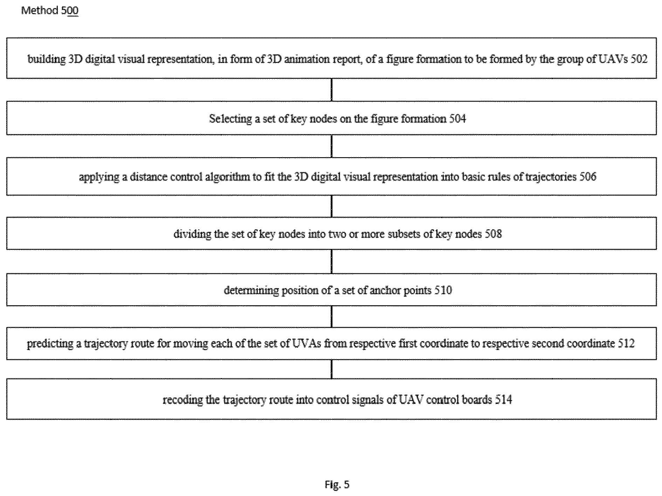

66. Fig. 5 represents a flow diagram depicting method steps implemented for repositioning each UAV from the first coordinate to the second coordinate. The method steps mainly include building 3D digital visual representation of a static figure to be formed by the UAV swarm, selecting a set of key nodes on the static figure, determining position of a set of anchor points, predicting a trajectory route for moving each UAV from respective first coordinate to respective second coordinate, and recoding the trajectory route into control signals of UAV control boards.

67. At step 502, 3D digital visual representation of a figure formation, i.e., 3D animation report 104, to be formed by the UAV swarm is built by a 3D animation unit 102. The figure formation may be any figure or figure, for example, a butterfly.

68. At step 504, a set of key nodes on the static figure is selected by a trajectory validation unit 108. The combinational placement of the set of the key nodes visually represents the figure formation. Number of key nodes corresponds to the number of UAVs.

69. At step 506, a distance control algorithm is applied on 3D animation, by 3D animation unit 102, wherein one or more flight control parameters are tuned to fit the 3D digital visual representation into basic rules of trajectories. The distance control algorithm optimizes the flight mission as such to travel the shortest distance with minimum consumption of resources.

70. At step 508, the set of key nodes are divided by 3D animation unit 102 into two or more subsets of key nodes. Each subset of key nodes is controlled separately and independent of each other.

71. At step 510, position for each of a set of anchor points is determined based on the key nodes. Each of the set of anchor points correspond to the second coordinate of the respective UAV. UAV may be configured to reach the second coordinate and assume position at the respective anchor point.

72. At step 512, a trajectory route is predicted for moving each of the set of UAVs from respective first coordinate to respective second coordinate. The trajectory route may indicate a travel path that should be traversed by the UAV to reach at the second coordinate.

73. At step 514, the trajectory route is recorded into control signals of UAV control boards. The control boards of UAV may receive the flight plan from a drone connector. The control boards are configured to drive UAVs to respective anchor points along the trajectory route.

## Claims

1. A method of repositioning each Unmanned Aerial Vehicle (UAV) of a group of UAVs from respective first coordinate to a second coordinate, comprises:
building, by 3D animation generator, 3D digital visual representation, in form of 3D animation report, of a figure formation to be formed by the group of UAVs,
selecting, by 3D animation generator, a set of key nodes on the figure formation, wherein combination of the set of the key nodes visually represents the static figure, and wherein number of key nodes corresponds to number of UAVs;
applying a distance control algorithm, by 3D animation generator, wherein one or more flight control parameters are tuned to fit the 3D digital visual representation into basic rules of trajectories;
dividing, by 3D animation generator, the set of key nodes into two or more subsets of key nodes, wherein each subset of key nodes is controlled separately;
determining position of a set of anchor points, wherein each of the set of anchor points correspond to the second coordinate of respective UAV;
predicting a trajectory route for moving each of the set of UAVs from respective first coordinate to respective second coordinate; and
recoding the trajectory route into control signals of UAV control boards, wherein the control boards are configured to drive UAVs to respective anchor points along the trajectory route.

2. The method as claimed in claim 1, further comprises substituting physical models of UAVs with the key nodes, wherein the position of each key node is relative to the second coordinates.

3. The method as claimed in claim 1, further comprises the position of the anchor points is determined by one or more flight related parameters, wherein the position of the anchor points can be changed programmatically during pre-flight setup.

4. The method as claimed in claim 1, wherein the first coordinates correspond to the current position of each of the set of UAVs in space.

5. The method as claimed in claim 1, further comprises building an anchor points model visually representing a determined position of each anchor point.

6. The method as claimed in claim 1, wherein predicting the trajectory route is based on a dynamic model of UAVs assessing one or more flight parameters, a physical model of UAVs assessing collision free movement, and predicting intermediate points along the trajectory route for visualizing one or more events.

7. The method as claimed in claim 6, wherein the one or more flight parameters comprises speed, maximum flight altitude, instantaneous acceleration, and flight time.

8. The method as claimed in claim 6, wherein the one or more events are tornado, explosion, storm or such calamity and threat.

9. The method as claimed in claim 6, wherein the trajectory route is predicted as a timeline.

10. The method as claimed in claim 9, wherein the trajectory route prediction is presented in a
trajectory route model, and wherein the trajectory route model comprises:
a set of coordinating points defining motion trajectory for each UAV, and
codes of light signals corresponding to each of the coordinating points as a task of light indication.

11. The method as claimed in claim 10, sampling period of the set of coordinating points along the motion trajectory is within a range of about 5 to 6 Hz frequency.

12. The method as claimed in claim 10, wherein sampling period of the light signal is about 30Hz frequency.

13. The method as claimed in claim 1, further comprises synchronizing all UAVs of the group of UAVs and their respective flight tasks.

14. An UAV swarm repositioning system implemented by a computing system comprises:
a 3D animation generator to generate animation of a figure formation placing a set of key nodes on the figure formation, wherein each of the set of key nodes denote one UAV from the UAV swarm;
a mission generator comprising:
a trajectory validation unit to plan trajectory route for each UAV, wherein the trajectory path connects first coordinate with second coordinate of each UAV;
a trajectory optimization unit to optimize trajectory planning;
a mapping unit;
a mission planning assembler to plan flight planning details; and
a drone connector to communicate with drones
